(19) Europäisches Patentamt
European Patent Office
Office européen des brevets

(11) **EP 3 839 644 B1**

(12) **FASCICULE DE BREVET EUROPEEN**

(45) Date de publication et mention
de la délivrance du brevet:
**28.01.2026 Bulletin 2026/05**

(21) Numéro de dépôt: **19219083.3**

(22) Date de dépôt: **20.12.2019**

(51) Classification Internationale des Brevets (IPC):
**G04B 17/04** *(2006.01)* **G04B 17/06** *(2006.01)*
**G04B 1/14** *(2006.01)*

(52) Classification Coopérative des Brevets (CPC):
**G04B 17/045; G04B 17/066**

(54) **COMPOSANT HORLOGER FLEXIBLE, NOTAMMENT POUR MECANISME OSCILLATEUR, ET MOUVEMENT D'HORLOGERIE COMPORTANT UN TEL COMPOSANT**

FLEXIBLE UHRWERKSKOMPONENTE, INSBESONDERE FÜR OSZILLATIONSMECHANISMUS, UND EINE SOLCHE KOMPONENTE UMFASSENDES UHRWERK

FLEXIBLE TIMEPIECE COMPONENT, IN PARTICULAR FOR OSCILLATOR MECHANISM, AND CLOCKWORK COMPRISING SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**23.06.2021 Bulletin 2021/25**

(73) Titulaire: **Nivarox-FAR S.A.**
**2400 Le Locle (CH)**

(72) Inventeurs:
• **CUSIN Pierre**
**1423 Villars-Burquin (CH)**

• **CHARBON Christian**
**2054 Chézard-St-Martin (CH)**

(74) Mandataire: **ICB SA**
**Faubourg de l'Hôpital, 3**
**2001 Neuchâtel (CH)**

(56) Documents cités:
**EP-A1- 3 502 289      WO-A1-2013/064351**
**WO-A1-2014/006229   WO-A1-2016/199039**
**FR-A1- 3 052 881**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Processed by Luminess, 75001 PARIS (FR)

EP 3 839 644 B1

## Description

Domaine de l'invention

La présente invention est relative aux composants horlogers flexibles, notamment pour mécanisme oscillateur d'un mouvement d'horlogerie à coefficient thermoélastique positif.

L'invention se rapporte également à un mouvement d'horlogerie comportant un tel composant.

Arrière-plan de l'invention

Les mouvements horlogers comprennent généralement un barillet, un mécanisme d'échappement et un mécanisme oscillateur mécanique. Le mécanisme d'échappement comporte, notamment, une ancre et une roue d'échappement, tandis que le mécanisme oscillateur comprend un ressort spiral associé à une masselotte oscillante appelée balancier.

Les progrès techniques dans les matériaux composites permettent aujourd'hui de fabriquer certains composants dans des matériaux innovants et performants, qui permettent de se passer, au moins en partie, des matériaux métalliques. Aujourd'hui, on essaye d'utiliser, par exemple, des nanotubes ou nano-fils pour fabriquer des composants. De tels matériaux avec des nanotubes ou nano-fils apportent des avantages en terme de légèreté et de solidité. Ainsi, le document JP2008116205A décrit un ressort spiral comprenant une matrice de graphite et de carbone amorphe, renforcée par des nanotubes de carbone qui sont dispersés dans la matrice et alignés dans la direction longitudinale du spiral. Le document FR3052881 décrit des composants d'horlogerie fabriqués dans un matériau composite comprenant également des nanotubes de carbone tenus dans une matrice, de manière à être sensiblement parallèles les uns aux autres.

Cependant, les composants flexibles, par exemple les résonateurs, subissent généralement des déformations et des modifications de leurs propriétés élastiques, qui sont dues à la variation de la température pendant les mouvements répétitifs qu'ils effectuent. La variation de la fréquence en fonction de la température dans le cas d'un résonateur balancier-spiral suit sensiblement la formule suivante :

$$\frac{\Delta f}{f} \frac{1}{\Delta T} = \frac{1}{2} \left\{ \frac{\partial E}{\partial T} \frac{1}{E} + 3 \cdot \alpha_s - 2 \cdot \alpha_b \right\}$$

où :

- $\dfrac{\Delta f}{f} \dfrac{1}{\Delta T}$ est la variation de fréquence en fonction de la température ;

- $\dfrac{\partial E}{\partial T} \dfrac{1}{E}$ est la variation du module d'Young en fonction de la température, c'est-à-dire le coefficient de thermoélasticité (CTE) du spiral ;
- $\alpha_s$ le coefficient de dilatation du spiral, exprimé en ppm.°C$^{-1}$ ;

  - $\alpha_b$ le coefficient de dilatation du balancier, exprimé en ppm.°C$^{-1}$

Les déformations et modifications des propriétés du matériau provoquent une variation du module élastique du composant flexible. Or, ces variations du module élastique dues à la température, nuisent à la précision des mouvements d'horlogerie.

Résumé de l'invention

Un but de l'invention est, par conséquent, de proposer un composant horloger flexible, qui évite le problème précité.

A cet effet, l'invention concerne un composant horloger flexible pour mécanisme oscillateur d'un mouvement horloger, le composant comportant au moins une partie réalisée en une matière composite, le composant ayant une forme sensiblement plate s'étendant selon un plan préférentiel.

Le composant est remarquable en ce que la matière composite comprend une matrice et une multitude de nano-fils répartis dans la matrice, les nano-fils étant juxtaposés et disposés de manière sensiblement parallèle à un axe sensiblement perpendiculaire au plan du composant, la matrice comportant un matériau de remplissage flexible pour remplir les interstices entre les nano-fils, le matériau de remplissage comprenant au moins en partie un matériau de compensation thermique dont le coefficient de thermoélasticité est de signe opposé à celui des autres matériaux de la matière composite.

Ainsi, grâce à un tel composant flexible, on peut compenser les modifications des propriétés du matériau, par exemple pour un ressort-spiral, lorsque la température varie. En effet, le matériau de compensation thermique ayant un coefficient de thermoélasticité de signe opposé aux autres matériaux de la matière composite, la variation du module d'élasticité du matériau de compensation se produit de manière inverse à celle de la déformation des autres matériaux du composant, qui ont un coefficient de thermoélasticité de signe opposé. Ainsi, la performance du composant demeure sensiblement la même, quelle que soit la température d'utilisation du composant, en particulier en cas de variation significative de la température.

Selon une forme de réalisation avantageuse, le matériau de compensation thermique a un coefficient thermoélastique supérieur à 0. Dans ce cas, le matériau de compensation thermique compense d'autres matériaux ayant un coefficient de thermoélasticité inférieur à zéro.

Selon une forme de réalisation avantageuse, le matériau de compensation thermique comporte de l'oxyde de silicium SiO2, de préférence majoritairement, voire en totalité.

Selon une forme de réalisation avantageuse, le matériau de compensation thermique comporte du Niobium, de préférence majoritairement, voire en totalité.

Selon une forme de réalisation avantageuse, le matériau de compensation thermique forme une couche externe de la matrice, la couche externe entourant de préférence la matrice en entier.

Selon une forme de réalisation avantageuse, le matériau de compensation thermique est agencée directement sur les nano-fils.

Selon une forme de réalisation avantageuse, les nano-fils sont réalisés à partir d'un élément à choisir dans la liste suivante : de l'or, du silicium, de l'oxyde de silicium, du nitrure de bore, du nitrure de gallium, du nitrure de silicium, de l'oxyde de zinc, de l'arséniure de gallium, du sulfure de tungstène, de l'argent, du cuivre, de l'arséniure de manganèse, de l'arséniure d'indium.

Selon une forme de réalisation avantageuse, les nano-fils ont un diamètre compris dans un intervalle allant de 2 à 50 nm, de préférence dans un intervalle allant de 3 à 15 nm, voire de 5 à 10 nm.

Selon une forme de réalisation avantageuse, les nano-fils ont une longueur comprise dans un intervalle allant de 100 à 500 microns, de préférence dans un intervalle allant de 100 à 300 microns, voire de 150 à 200 microns.

Selon une forme de réalisation avantageuse, le matériau de remplissage comprend en outre un élément à choisir dans la liste suivante : du silicium, du tungstène, des matériaux organiques comme le parylène, du nitrure de bore hexagonal, du rubis monocristallin de type Al2O3, du diamant, des bisulfures de tungstène ou de molybdène, du graphite, du plomb, du carbure de silicium, du nickel, du phosphure d'indium, de l'oxyde de titane.

Selon une forme de réalisation avantageuse, le composant est un ressort spiral d'un mécanisme oscillateur, ou un guide à lames flexibles d'un mécanisme oscillateur.

L'invention se rapporte également à un mouvement horloger comprenant un composant horloger flexible selon l'invention.

Description sommaire des dessins

D'autres caractéristiques et avantages de la présente invention apparaîtront à la lecture de plusieurs formes de réalisation données uniquement à titre d'exemples non limitatifs, en référence aux dessins annexés dans lesquels :

- la figure 1 représente schématiquement une vue en perspective traversante d'une matière composite selon un premier mode de réalisation de l'invention,
- la figure 2 représente schématiquement une vue en perspective traversante d'une matière composite selon un deuxième mode de réalisation de l'invention,
- la figure 3 représente schématiquement une vue en perspective d'un balancier muni d'un ressort spiral d'un mécanisme d'oscillation, et
- la figure 4 représente schématiquement une vue en coupe de la matière composite au cours du procédé de fabrication d'un mode de réalisation, qui ne fait pas partie de l'invention.

Description détaillée de modes de réalisation préférés

Dans la description, nous présentons des composants flexibles pour un mouvement horloger. Le composant est un composant flexible à choisir dans une liste comprenant par exemple un ressort spiral de mécanisme oscillateur ou un guide à lames flexibles de mécanisme oscillateur.

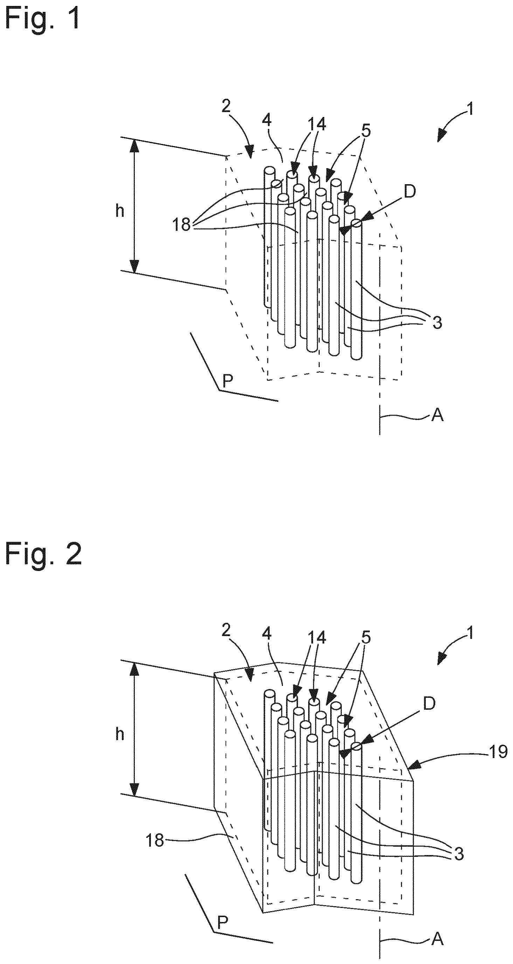

Le composant flexible comporte au moins une partie réalisée en une matière composite 1, représentée sur la figure 1. De préférence, le composant est réalisé entièrement dans cette matière composite 1. Ainsi, les composants de la liste précédentes peuvent être réalisés dans cette matière composite 1.

La matière composite 1 comprend une matrice 2 et une multitude de de nano-fils 3 répartis dans ladite matrice 2. Le composant a, par exemple, une forme sensiblement plate s'étendant selon un plan P préférentiel.

Les nano-fils 3 forment une structure de la matière composite 1, dans laquelle ils sont juxtaposés et disposés sensiblement parallèlement les uns aux autres. On entend que les nano-fils sont généralement pleins, c'est à-dire monoblocs.

Les nano-fils 3 sont disposés de manière sensiblement parallèle à un axe A, perpendiculaire au plan P du composant 1. Ils sont régulièrement répartis de manière à être espacés les uns des autres de façon homogène dans la matrice 2. Avantageusement, la matière composite est réalisée de manière à ce que des nano-fils 3 soient présents dans toute la masse de la matrice 2.

Les nano-fils 3 ont, par exemple, un diamètre D compris dans un intervalle allant de 2 à 50 nm. De préférence, les nano-fils 3 ont un diamètre compris dans un intervalle allant de 3 à 15 nm, voire de 5 à 10 nm.

Les nano-fils 3 peuvent avoir une longueur L comprise dans un intervalle allant de 100 à 500 microns. De préférence, les nano-fils 3 ont une longueur comprise dans un intervalle allant de 100 à 300 microns, voire de 150 à 200 microns.

Dans un mode de réalisation selon l'invention, la matière composite comporte des nano-fils 3 réalisés au moins en partie à partir d'un matériau à choisir dans la liste suivante : de l'or, du silicium, du nitrure de bore, du nitrure de gallium, du nitrure de silicium, de l'oxyde de zinc, de l'arséniure de gallium, du sulfure de tungstène, de l'argent, du cuivre, de l'arséniure de manganèse, de l'arséniure d'indium.

La matrice 2 comporte un matériau de remplissage 4 pour remplir les interstices et joindre les nano-fils 3 les uns aux autres. Le matériau 4 peut avantageusement englober les nano-fils 3, en étant injecté dans les interstices 5 entre les nano-fils 3. Ce matériau 4 permet d'apporter de la cohésion entre les nano-fils 3 et de modifier ainsi les propriétés mécaniques de l'ensemble des nano-fils 3, en particulier pour rendre la matrice flexible.

Le matériau de remplissage 4 permet la flexibilité du composant, le matériau de remplissage 4 ayant des propriétés mécaniques élastiques. On obtient en outre un composant flexible grâce à la forme géométrique choisie pour le composant. Ainsi, grâce à ce matériau de remplissage flexible 4, on peut réaliser des composants spécifiques de la mécanique horlogère.

Selon l'invention, le matériau de remplissage 4 comprend au moins en partie un matériau de compensation thermique 18 dont le coefficient thermoélastique (CTE) est de signe opposé à celui des autres matériaux de la matière composite 1.

Le coefficient thermoélastique (CTE) est par exemple compris dans un intervalle allant de 1ppm/°C à 100ppm/°C.

On choisit la fraction volumique et le coefficient thermoélastique du matériau de compensation thermique 18 pour compenser le coefficient thermoélastique du matériau de remplissage 4. Ce choix peut être effectué par calcul ou empiriquement.

Dans une première variante de réalisation, le matériau de compensation thermique 18 comporte de l'oxyde de silicium SiO2, de préférence majoritairement, voire en totalité. L'oxyde de silicium peut être obtenu en oxydant du silicium. Le silicium est déposé par couches minces, en utilisant des techniques connues de dépôt en phase vapeur à basse pression de type LPCVD ou par dépôt de couches atomiques de type ALD, par dépôt plasma de type PECVD, ou encore par croissance orientée de type épitaxie. Dans ce cas, le coefficient thermoélastique du matériau de compensation thermique 18 est supérieur à zéro, et permet de compenser des matériaux dont le coefficient thermoélastique est inférieur à zéro.

Dans une deuxième variante de réalisation, le matériau de compensation thermique 18 comporte du Niobium, de préférence majoritairement, voire en totalité. Le niobium est un métal de transition qui peut être déposé par des techniques classiques connues de dépôt de couches minces, de type PVD, CVD ou ALD.

Le matériau de remplissage 4 composant la matrice 2 peut en outre comprendre un élément supplémentaire de la liste suivante : du tungstène, des matériaux organiques comme le parylène, du nitrure de bore hexagonal, du rubis monocristallin de type Al2O3, du diamant, des bisulfures de tungstène ou de molybdène, du graphite, du plomb, du carbure de silicium, du nickel, du phosphure d'indium, de l'oxyde de titane, ou du carbone. Par exemple, l'élément du matériau de remplissage est du Silicium, et la couche de compensation thermique est de l'oxyde de silicium.

Dans un premier mode de réalisation, représenté sur la figure 1, le matériau de compensation thermique 18 est agencé directement sur les nano-fils 3. Le matériau de compensation thermique 18 est infiltré entre les nano-fils 3 pour les recouvrir au moins en partie. S'il y en a un, l'élément du matériau de remplissage 4 est également infiltré entre les nano-fils 3 pour recouvrir le matériau de compensation thermique 18. Dans ce cas, la matière composite 1 est formée des nano-fils 3, du matériau de compensation thermique 18 et de l'élément supplémentaire du matériau de remplissage 4.

Dans le cas du Niobium, ce dernier peut être mélangé à l'élément du matériau de remplissage 4, par exemple le titane, pour former un alliage offrant les propriétés de compensation thermiques selon l'invention.

Dans une première variante de réalisation, l'élément du matériau de remplissage 4 est infiltré entre les nano-fils 3, puis est recouvert par le matériau de compensation thermique. Le matériau de compensation thermique est également infiltré entre les nano-fils, mais n'est pas directement en contact avec les nano-fils.

Dans une deuxième variante de réalisation, seul le matériau de compensation thermique 18 est infiltré entre les nano-fils pour les joindre entre eux et former le composant. Dans ce cas, le matériau de remplissage 4 est formé seulement du matériau de compensation thermique, sans élément supplémentaire. La matière composite 1 est alors formée par les nano-fils 3 et par le matériau de compensation thermique 18.

Dans un deuxième mode de réalisation, le matériau de compensation 18 thermique forme une couche externe 19 de la matrice, la couche externe 19 entourant de préférence la matrice en entier, bien qu'il soit possible de déposer une couche sur certaines faces seulement. Pour ce mode de réalisation, l'élément du matériau de remplissage 4 est infiltré entre les nano-fils 3 pour former l'âme du composant, puis une couche 19 de matériau de compensation thermique, est déposé autour de l'âme pour former le composant.

Le matériau de remplissage 4 permet la flexibilité du composant, le matériau 4 ayant des propriétés mécaniques flexibles pour permettre une déformation élastique du composant. On obtient en outre un composant flexible grâce à la forme géométrique choisie pour le composant. Le composant est, par exemple, un ressort spiral 6 d'un mécanisme oscillateur 8 d'un mouvement d'horlogerie.

Ainsi, les composants horlogers peuvent bénéficier des avantages des matériaux composites à base de de nano-fils, tout en conservant les propriétés essentielles à ce type de composants, par exemple pour un ressort spiral.

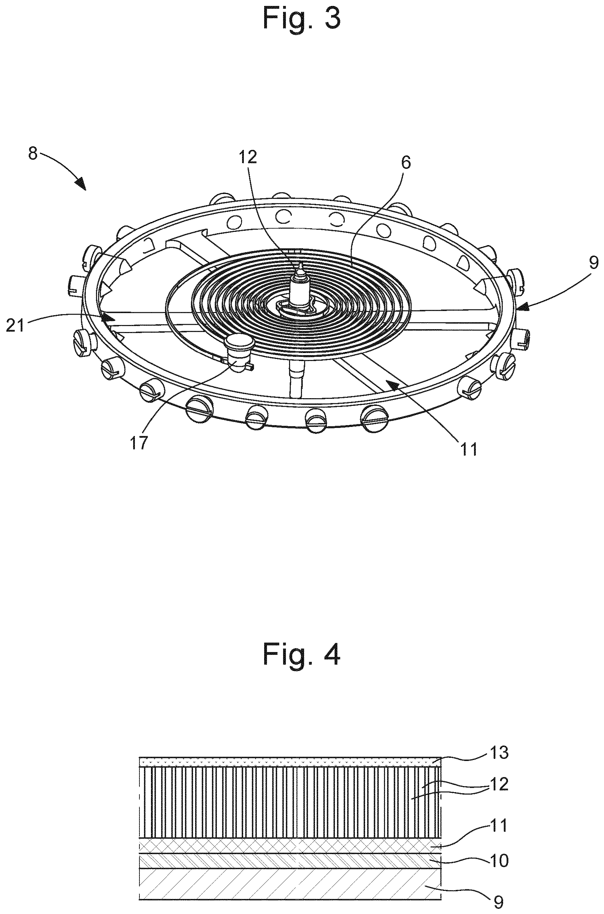

La figure 3 représente un ressort spiral 6 d'un balancier 8 réalisé à partir d'une telle matière composite flexible. Le ressort spiral 6 est un ruban de faible largeur enroulé en spirale d'Archimède, de sorte qu'il existe un espace libre entre les portions de ruban en vis à vis. Ainsi, par contraction et déformation de la spirale, on obtient un l'effet ressort recherché. Le balancier 8 comprend un anneau 9 circulaire et deux bras 11, 21 rectilignes se croisant au centre de l'anneau 9 et reliant deux côtés opposés de l'anneau 9. Les bras 11, 21 maintiennent un axe 12 sensiblement perpendiculaire au plan de l'anneau 9. L'axe 12 porte le ressort spiral 6 dans un plan parallèle à celui de l'anneau 9 par une première extrémité. La deuxième extrémité est destinée à être fixée à une autre pièce 17 du mouvement horloger.

Pour fabriquer les composants, on utilise, par exemple, un procédé comprenant les étapes suivantes :

- une première étape de préparation d'un substrat, par exemple un substrat en silicium, de préférence par photolithographie, pour que la croissance de la forêt de nano-fils se produise à un endroit précis correspondant à la forme du composant souhaité. Ainsi, on dessine une forme de spiral ou de pivot flexible par photolithographie,

- une deuxième étape de croissance des nano-fils sur un substrat, non représenté sur les figures,

- une troisième étape d'insertion du matériau de remplissage constitutif de la matrice dans la distribution de nano-fils, et

- une quatrième étape de décrochement du composant du substrat.

Pendant la deuxième étape, on fait croître les nano-fils 12 parallèlement à un axe sensiblement perpendiculaire au substrat.

Concernant la fabrication des nano-fils, on utilise les techniques classiques liées au matériau choisi dans la liste. On utilise de préférence le dépôt de couches minces, par exemple par dépôt chimique de type CVD (pour Chemical Vapor Deposition en anglais) ou par dépôt physique de type PVD (pour physical vapor deposition en anglais). Comme dans le premier mode de réalisation, on utilise des méthodes de photolithographie pour choisir les endroits d'un substrat, par exemple en silicium, où l'on fait croître les nano-fils. On insère le matériau flexible entre les nano-fils. Enfin, le composant est décroché du substrat une fois qu'il est terminé.

La demande de brevet internationale WO 2014/172660 donne un exemple de réalisation de nano-fils en silice. Les nano-fils en silice ont un coefficient thermoélastique supérieur à zéro. Ainsi, le matériau de compensation thermoélastique du matériau de remplissage doit avoir un coefficient thermoélastique inférieur à zéro pour compenser le matériau des nano-fils.

Naturellement, l'invention n'est pas limitée aux modes de réalisation décrits en référence aux figures et des variantes pourraient être envisagées sans sortir du cadre de l'invention.

**Revendications**

1. Composant horloger flexible (6, 7) pour mécanisme oscillateur d'un mouvement horloger, le composant comportant au moins une partie réalisée en une matière composite (1), le composant (6, 7) ayant une forme sensiblement plate s'étendant selon un plan (P) préférentiel, dans lequel la matière composite (1) comprend une matrice (2) et une multitude de nano-fils (3) répartis dans la matrice (2), les nano-fils (3) étant juxtaposés et disposés de manière sensiblement parallèle à un axe (A) sensiblement perpendiculaire au plan (P) du composant (6, 7), la matrice comportant un matériau de remplissage (4) flexible pour remplir les interstices entre les nano-fils (3), le matériau de remplissage (4) comprenant au moins en partie un matériau de compensation thermique (18) dont le coefficient de thermoélasticité (CTE) est de signe opposé à celui des autres matériaux de la matière composite (1).

2. Composant (6, 7) selon la revendication 1, **caractérisé en ce que** le matériau de compensation thermique (18) a un coefficient thermoélastique supérieur à 0.

3. Composant (6, 7) selon la revendication 2, **caractérisé en ce que** le matériau de compensation thermique (18) comporte de l'oxyde de silicium SiO2, de préférence majoritairement, voire en totalité.

4. Composant (6, 7) selon la revendication 2, **caractérisé en ce que** le matériau de compensation thermique comporte du Niobium, de préférence majoritairement, voire en totalité.

5. Composant (6, 7) selon l'une, quelconque, des revendications précédentes, **caractérisé en ce que** le matériau de compensation thermique forme une couche externe de la matrice.

6. Composant (6, 7) selon l'une, quelconque, des revendications précédentes, **caractérisé en ce que** le matériau de compensation thermique est agencée directement sur les nano-fils.

7. Composant (6, 7) selon l'une, quelconque, des revendications 1 à 6, **caractérisé en ce que** les nano-fils (3) sont réalisés à partir d'un élément à choisir dans la liste suivante : de l'or, du silicium, de l'oxyde de silicium, du nitrure de bore, du nitrure de gallium, du nitrure de silicium, de l'oxyde de zinc, de l'arséniure de gallium, du sulfure de tungstène, de l'argent, du cuivre, de l'arséniure de manganèse, de l'arséniure d'indium.

8. Composant (6, 7) selon l'une, quelconque, des revendications précédentes, **caractérisé en ce que** les nano-fils (3) ont un diamètre (D) compris dans un intervalle allant de 2 à 50 nm, de préférence dans un intervalle allant de 3 à 15 nm, voire de 5 à 10 nm.

9. Composant (6, 7) selon l'une, quelconque, des revendications précédentes, **caractérisé en ce que** les nano-fils (3) ont une longueur (L) comprise dans un intervalle allant de 100 à 500 microns, de préférence dans un intervalle allant de 100 à 300 microns, voire de 150 à 200 microns.

10. Composant (6, 7) selon l'une, quelconque, des revendications précédentes, **caractérisé en ce que** le matériau de remplissage (4) comporte en outre un élément à choisir dans la liste suivante : du silicium, du tungstène, des matériaux organiques comme le parylène, du nitrure de bore hexagonal, du rubis monocristallin de type Al2O3, du diamant, des bisulfures de tungstène ou de molybdène, du graphite, du plomb, du carbure de silicium, du nickel, du phosphure d'indium, de l'oxyde de titane, du silicium.

11. Composant (6, 7) selon l'une, quelconque, des revendications précédentes, **caractérisé en ce qu'**il est un ressort spirale (6) d'un mécanisme oscillateur, ou un guide à lames flexibles d'un mécanisme oscillateur.

12. Mouvement horloger, **caractérisé en ce qu'**il comprend un composant horloger flexible (6, 7) selon l'une, quelconque, des revendications précédentes.

**Patentansprüche**

1. Biegsame Uhrwerkkomponente (6, 7) für einen Oszillatormechanismus in einem Uhrwerk, die Komponente zumindest einen aus einem Verbundmaterial (1) hergestellten Teil umfassend, die Komponente (6, 7) eine im Wesentlichen flache Form aufweisend, die sich in einer Vorzugsebene (P) erstreckt, in der das Verbundmaterial (1) eine Matrix (2) und eine Vielzahl von Nanodrähten (3), die in der Matrix (2) verteilt sind, umfasst, wobei die Nanodrähte (3) nebeneinander angeordnet und im Wesentlichen parallel zu einer Achse (A), die im Wesentlichen senkrecht zu der Ebene (P) der Komponente ist, angeordnet sind, die Matrix ein flexibles Füllmaterial (4) zum Füllen der Zwischenräume zwischen den Nanodrähten (3) umfassend, wobei das Füllmaterial (4) zumindest teilweise ein Wärmekompensationsmaterial (18) umfasst, in dem der Thermoelastizitätskoeffizient (TEC) das entgegengesetzte Vorzeichen wie die anderen Materialien in dem Verbundmaterial (1) hat.

2. Komponente (6, 7) nach Anspruch 1, **dadurch gekennzeichnet, dass** das Wärmekompensationsmaterial (18) einen Thermoelastizitätskoeffizienten größer als 0 aufweist.

3. Komponente (6, 7) nach Anspruch 2, **dadurch gekennzeichnet, dass** das Wärmekompensationsmaterial (18) Siliziumoxid SiO2 umfasst, vorzugsweise überwiegend oder sogar vollständig.

4. Komponente (6, 7) nach Anspruch 2, **dadurch gekennzeichnet, dass** das Wärmekompensationsmaterial Niob umfasst, vorzugsweise überwiegend oder sogar vollständig.

5. Komponente (6, 7) nach einem der vorhergehenden Ansprüche, **dadurch gekennzeichnet, dass** das Wärmekompensationsmaterial eine Außenschicht der Matrix bildet.

6. Komponente (6, 7) nach einem der vorhergehenden Ansprüche, **dadurch gekennzeichnet, dass** das Wärmekompensationsmaterial direkt auf den Nanodrähten angeordnet ist.

7. Komponente (6, 7) nach einem der Ansprüche 1 bis 6, **dadurch gekennzeichnet, dass** die Nanodrähte (3) aus einem Element hergestellt sind, das aus der folgenden Liste auszuwählen ist: Gold, Silizium, Siliziumoxid, Bornitrid, Galliumnitrid, Siliziumnitrid, Zinkoxid, Galliumarsenid, Wolframsulfid, Silber, Kupfer, Manganarsenid, Indiumarsenid.

8. Komponente (6, 7) nach einem der vorhergehenden Ansprüche, **dadurch gekennzeichnet, dass** die Nanodrähte (3) einen Durchmesser (D) aufweisen, der in einem Bereich von 2 bis 50 nm, vorzugsweise in einem Bereich von 3 bis 15 nm oder sogar von 5 bis 10 nm liegt.

9. Komponente (6, 7) nach einem der vorhergehenden Ansprüche, **dadurch gekennzeichnet, dass** die Nanodrähte (3) eine Länge (L) aufweisen, die in einem Bereich von 100 bis 500 Mikrometern, vorzugsweise in einem Bereich von 100 bis 300 Mikrometern oder sogar von 150 bis 200 Mikrometern liegt.

10. Komponente (6, 7) nach einem der vorhergehenden Ansprüche, **dadurch gekennzeichnet, dass** das Füllmaterial (4) ferner ein Element umfasst, das aus der folgenden Liste auszuwählen ist: Silizium, Wolfram, organische Materialien wie Parylen, hexagonales Bornitrid, monokristallines Rubin vom Typ Al2O3, Diamant, Wolfram oder Molybdändisulfide, Graphit, Blei, Siliziumcarbid, Nickel, Indiumphosphid, Titanoxid, Silizium.

11. Komponente (6, 7) nach einem der vorhergehenden Ansprüche, **dadurch gekennzeichnet, dass** sie eine Unruhfeder (6) in einem Oszillatormechanismus oder eine biegsame Blattführung in einem Oszillatormechanismus ist.

12. Uhrwerk, **dadurch gekennzeichnet, dass** es eine biegsame Uhrwerkkomponente (6, 7) nach einem der vorhergehenden Ansprüche umfasst.

**Claims**

1. A flexible horology component (6, 7) for an oscillator mechanism in a horology movement, the component comprising at least one part made of a composite material (1), the component (6, 7) having a substantially flat shape extending in a preferential plane (P), in which the composite material (1) comprises a matrix (2) and a multitude of nanowires (3) distributed in the matrix (2), the nanowires (3) being juxtaposed and arranged substantially parallel with an axis (A) substantially perpendicular to the plane (P) of the component, the matrix comprising a flexible filling material (4) to fill the interstices between the nanowires (3), the filling material (4) at least partially comprising a thermal compensation material (18) in which the thermoelastic coefficient (TEC) is of the opposite sign to that of the other materials in the composite material (1).

2. The component (6, 7) according to claim 1, **characterised in that** the thermal compensation material (18) has a thermoelastic coefficient greater than 0.

3. The component (6, 7) according to claim 2, **characterised in that** the thermal composition material (18) comprises silicon oxide SiO2, preferably predominantly or even entirely.

4. The component (6, 7) according to claim 2, **characterised in that** the thermal compensation material comprises niobium, preferably predominantly or even entirely.

5. The component (6, 7) according to any of the preceding claims, **characterised in that** the thermal compensation material forms an outer layer of the matrix.

6. The component (6, 7) according to any of the preceding claims, **characterised in that** the thermal compensation material is arranged directly on the nanowires.

7. The component (6, 7) according to any of claims 1 to 6, **characterised in that** the nanowires (3) are made from an element to be chosen from the following list: gold, silicon, silicon oxide, boron nitride, gallium nitride, silicon nitride, zinc oxide, gallium arsenide, tungsten sulphide, silver, copper, manganese arsenide, indium arsenide.

8. The component (6, 7) according to any of the preceding claims, **characterised in that** the nanowires (3) have a diameter (D) comprised in a range of from 2 to 50 nm, preferably in a range of from 3 to 15 nm, or even from 5 to 10 nm.

9. The component (6, 7) according to any of the preceding claims, **characterised in that** the nanowires (3) have a length (L) comprised in a range of from 100 to 500 microns, preferably in a range of from 100 to 300 microns, or even from 150 to 200 microns.

10. The component (6, 7) according to any of the preceding claims, **characterised in that** the filling material (4) further comprises an element to be chosen from the following list: silicon, tungsten, organic materials such as parylene, hexagonal boron nitride, Al2O3 type monocrystalline ruby, diamond, tungsten or molybdenum disulphides, graphite, lead, silicon carbide, nickel, indium phosphide, titanium oxide, silicon.

11. The component (6, 7) according to any of the preceding claims, **characterised in that** it is a balance spring (6) in an oscillator mechanism, or a flexible blade guide in an oscillator mechanism.

12. A horology movement, **characterised in that** it comprises a flexible horology component (6, 7) according to any of the preceding claims.

## Fig. 1

## Fig. 2

# Fig. 3

# Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2008116205 A
- FR 3052881

- WO 2014172660 A